# EUROPEAN PATENT APPLICATION

(11) **EP 1 271 982 A1**
(43) Date of publication of application: **02.01.2003**
(21) Application number: 01401624.0
(22) Date of filing: 19.06.2001
(51) Int. Cl.: H04Q 7/36

(54) **Secondary scrambling code allocation method**

(71) Applicant: Mitsubishi Electric Information Technology Centre Europe B.V., 1101 AG Amsterdam Zuidoost (NL)
(72) Inventor: Voyer, Nicolas, Mitsubishi Electricité, 35700 Rennes (FR)
(74) Representative: Maillet, Alain

(57) **Abstract**

The invention relates to a method for allocating scrambling codes in a CDMA mobile communication system allocating to each downlink communication a channelisation code and a scrambling code, said scrambling code being selected among a set of scrambling codes comprising a primary scrambling code and a plurality of secondary scrambling codes. According to the invention, if the primary scrambling code is not available, a secondary scrambling code is allocated so that distinct secondary scrambling codes are allocated to spatially separated communications.

## Description

The present invention relates generally to a method for allocating scrambling codes in a CDMA (Code Division Multiple Access) mobile telecommunication system, and in particular to a method for allocating secondary scrambling codes in UMTS (Universal Mobile Telecommunication System).

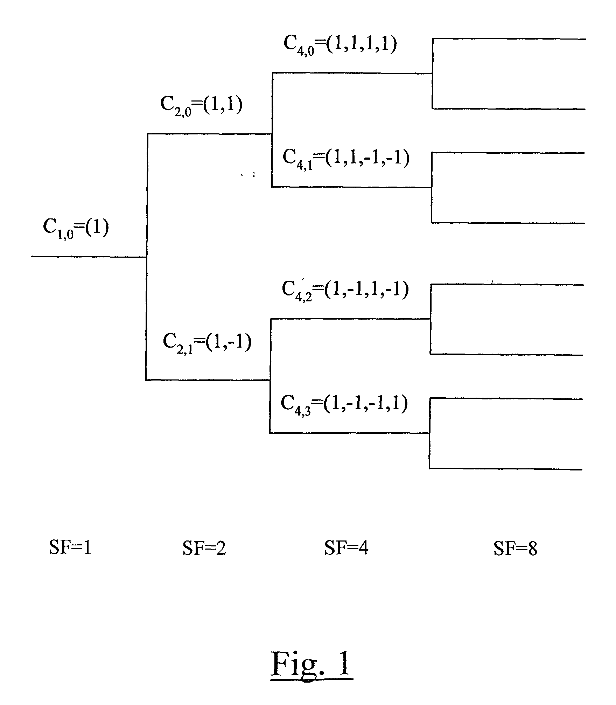

In a CDMA mobile telecommunication system, each communication from or to a user is assigned a spreading sequence, also called spreading code or channelisation code. The spreading codes are used to separate the downlink connections within one cell or one sector. The spreading codes used in UTRAN (UMTS Terrestrial Radio Access Network) are based on OVSF (Orthogonal Variable Spreading Factor) codes. The OVSF codes allow changes of the spreading factor while orthogonality between spreading codes of different lengths are maintained. Fig. 1 shows the beginning of the OVSF code tree. Each code, denoted C₂^{K}_{,n}, of a node gives birth to two codes C₂^{K+1}_{,2n} and C₂^{K+1}_{,2n+1}, where C₂^{K+1}_{,2n} =(C₂^{K}_{,n}, C₂^{K}_{,n}) and C₂^{K+1}_{,2n+1} =(C₂^{K}_{,n},- C₂^{K}_{,n}). All the codes belonging to the same level exhibit the same spreading factor SF, the value of SF doubling at each level while progressing from the root toward the leaves. Codes are assigned to communications according to their respective needs in terms of data rate, taking into account that a code of higher spreading factor will accommodate a lower bit rate. Furthermore, if a code is already allocated, the orthogonality constraint precludes the allocation of a code on an underlying branch or on the path to the root of the tree. This constraint drastically limits the number of OVSF codes which are simultaneously available. For example, if the four SF=4 codes or the eight SF=8 codes are already allocated no other code in the tree can be utilised. In UTRAN, the highest authorised spreading factor is 512 for the downlink channels.

Even if the code orthogonality constraint is met at the emitting side, orthogonality is not observed in practice at the receiving side because of the well known deleterious effect of multipath propagation. Nevertheless, allocating orthogonal spreading codes ensures the best possible reduction of intra-cellular interference.

In order to separate transmitters from each other, UTRAN adds a second level of coding called scrambling on top of spreading. If we consider the downlink communications, the scrambling codes are used both for identifying the base stations and for increasing their channel capacity. The downlink scrambling codes are pseudorandom sequences, typically Gold sequences, which have the effect of whitening the signals they are applied to. Due to scrambling, the interference between communications of two adjacent base stations using non-orthogonal spreading codes will average over time and thus will be less detrimental to the quality of service than without scrambling.

The scrambling code used for identification of a base station is referred to as a "primary scrambling code". Adjacent base stations use different primary scrambling codes so that they can be easily distinguished. The RNC (Radio Network Controller) allocates to the base stations it controls primary scrambling codes. The downlink communications of a base station are both coded with spreading codes (of the OVSF tree) and the primary scrambling code associated with the base station. The orthogonal spreading codes minimise the intracellular interference while the primary scrambling code averages the extra-cellular interference from the neighbouring cells. Although, in theory, a maximum of 512 orthogonal spreading codes can be allocated under one primary scrambling code, in practice, however, the number of available spreading codes could be much less because high data rate communications with low spreading factors may prevent allocation of large parts of the OVSF tree. If orthogonal spreading codes under a primary scrambling code are not available for allowing new communications in a cell to be established, the 3GPP/WCDMA standard specifies that additional scrambling codes (15 in number), called secondary scrambling codes can be employed. Since for each secondary scrambling code, the whole OVSF tree may be used, the allocation of secondary scrambling codes considerably increases the channel capacity of the base station. Of course, under this allocation scheme, only the communications coded with the same (primary or secondary) scrambling code are orthogonal. Conversely, communications coded with different scrambling codes are in general not orthogonal but, due to the whitening effect of the scrambling codes, the interference is not critical. However, the allocation of a secondary scrambling code is a measure of last resort and the allocation of an orthogonal spreading code under the primary scrambling code is always preferred. The primary scrambling code is therefore used until the OVSF does not allow assignment of additional orthogonal codes. Then a first secondary scrambling code is allocated and orthogonal codes are then assigned to new communications until the OVSF tree associated with said secondary scrambling code does not allow further communications. If no orthogonal code is available under the primary and secondary scrambling codes, a third scrambling code can be allocated etc.

In addition to identifying base stations, the primary scrambling codes can be employed for distinguishing sectors in a sectored cell. In WCDMA, a cell can be split into three sectors, each sector covering a 120° portion of the cell. Each sector can be considered as a new cell depending on the node B (base station) of the original cell and therefore can be allocated a distinct primary scrambling code. Within each sector, the downlink communications are separated by orthogonal spreading codes as in a single cell.

Whether in a cell or in a sector, the channel capacity is often limited by the lack of available orthogonal codes. The allocation of secondary scrambling codes alleviates the problem, though at the expense of a higher level of intra-cellular interference.

The first object of the present invention is to propose a method for increasing the channel capacity of a cell (resp. a sector) without incurring a higher level of intra-cellular (resp. intra-sectorial) interference. The second object of the present invention is to optimise the secondary scrambling code allocation in conformity with said primary object. Further advantages of the invention will be indicated in the course of the description.

The present invention is defined by the wording of appended claim 1. Various embodiments of the invention are defined in the dependent claims. The invention will be better understood from a description of the embodiments in relation to the following figures.
Fig. 1 shows a tree of OVSF channelisation codes in UTRAN as specified in the prior art;
Fig. 2a illustrates a scrambling code allocation within a sector according to the prior art;
Fig. 2b illustrates a scrambling code allocation within a sector according to a first embodiment of the invention;
Fig. 2c illustrates a scrambling code allocation within a sector according to a second embodiment of the invention;
Fig. 3 represents a flow chart of the method of scrambling code allocation according to the invention.

The basic idea underlying the invention is to overcome the lack of orthogonality of the secondary scrambling codes by taking profit of the spatial selectivity achieved by beamforming.

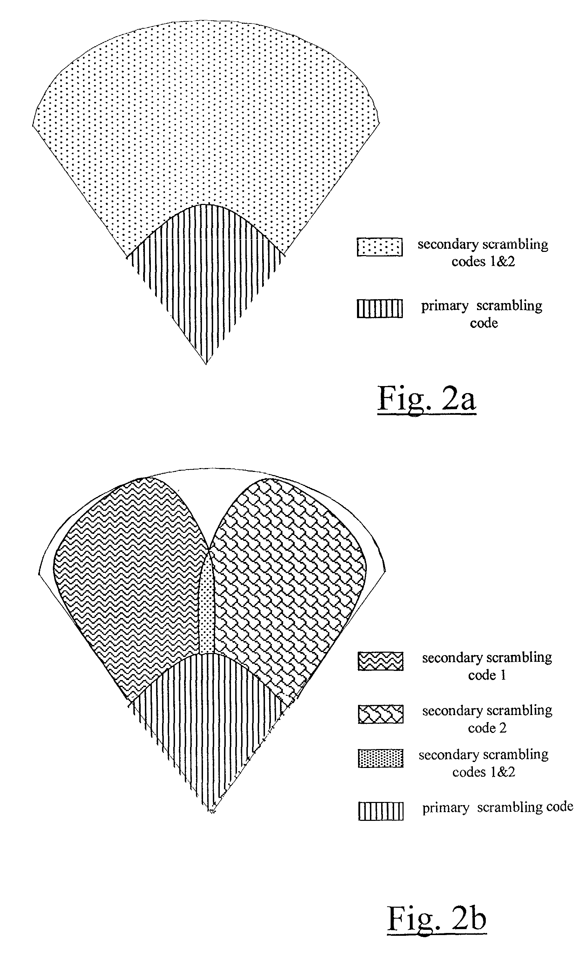

We consider first the case of a sectored cell, bearing in mind that each of the three sectors is allocated a distinct primary scrambling code. Suppose now that, for a given sector, the orthogonal spreading codes of the OVSF tree have been assigned up to the saturation stage, that is to say no further spreading code can be assigned without violating the orthogonality constraint. Suppose also that the node B is provided with an adaptive antenna array facility allowing a plurality of beams to be formed in predetermined different directions. If, within the considered sector, mobile terminals (also called hereinafter User Equipments) request new communications, a first secondary and, if necessary, further secondary scrambling codes are allocated. Let us assume for the sake of clarity that only two secondary scrambling codes are allocated. The situation of scrambling code allocation according to the prior art is depicted in Fig. 2a whereas the situation of scrambling code allocation according to a first embodiment of the invention is depicted in Fig. 2b. The respective areas covered by the first scrambling code, the first secondary scrambling code, the second secondary scrambling code are represented with different filling patterns. The overlapping zone of the areas covered by both the first and second secondary scrambling codes is represented by a dotted pattern.

In Fig. 2a the area covered by the first secondary scrambling code is identical to the one covered by the second secondary scrambling code. Downlink communications directed to mobiles located in this common area use non-orthogonal codes and are therefore poorly separated.

In contrast, with respect to Fig. 2b, secondary scrambling codes are allocated to two different beams. The non-orthogonality area is defined by the overlapping zone of the two beams, the spatial extension of which is limited. By using the spatial selectivity provided by the different beams, the lack of orthogonality of the secondary scrambling codes is overcome. If a plurality of secondary scrambling codes are needed to meet the channel capacity demand, they will be allocated to distinct beams. In general, the beam associated with the primary scrambling code has the same wide angular coverage of the sector as if no secondary scrambling code were allocated.

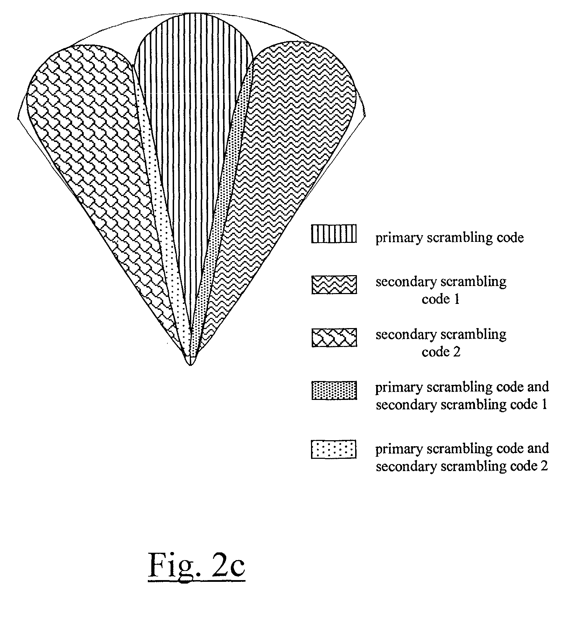

Fig. 2c depicts a scrambling code allocation according to a second embodiment of the invention. In contrast with the first embodiment, once one or several secondary scrambling codes are allocated, the beam associated with the first scrambling code is reconfigured and the angular coverage of the sector is shared among the beams associated with different scrambling codes, whether primary or secondary. In this instance, the primary scrambling code plays the same role as the secondary scrambling codes and distinct scrambling codes are simply allocated to distinct beams. The example illustrated in Fig. 2c shows the case where the primary scrambling code and two secondary scrambling codes have been allocated. The overlapping zones covered by two scrambling codes (primary or secondary), in which a lack of orthogonality occurs, are represented by dotted patterns. If, at a particular time, the traffic drops so the secondary scrambling codes is no further needed, the beam associated with the primary scrambling code may resume its original angular coverage.

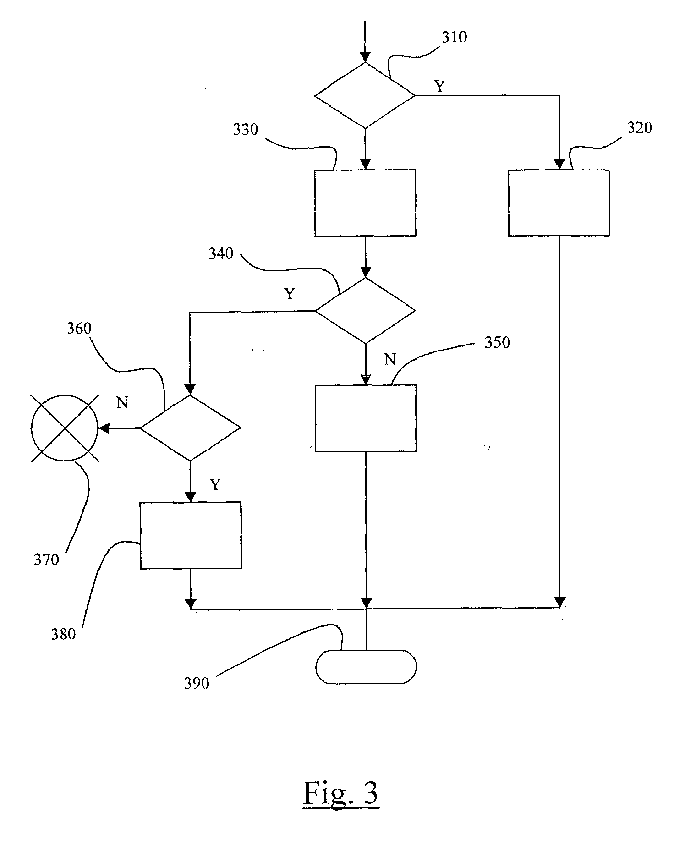

Fig. 3 illustrates a flow chart for the allocation of secondary scrambling codes according to the first embodiment of the invention. As explained further below, the allocation procedure is performed in UTRAN by the RNC (Radio Network Controller).

If a mobile needs to set up a connection for a communication, the availability of an orthogonal code meeting the data rate requested in the OVSF tree under the latter is assigned together with the primary scrambling code to the new communication in 320 and the allocation process is over. If not, the beam serving the mobile is determined in 330. In 340 is checked whether this beam is not already allocated a secondary scrambling code. In the negative, an available secondary scrambling code (among the 15 possible ones) is allocated both to the beam and the new communication in 350. An orthogonal code in the (empty) OVSF tree is also assigned and the process ends in 390. Turning now to the instance where the beam is already allocated a secondary scrambling code, the availability of an orthogonal code meeting the data rate requested in the OVSF tree under the said secondary scrambling code is checked in 360. If such an orthogonal code is available, it is assigned together with said secondary scrambling code to the new communication in 380. If not, the new communication is rejected in 370. Alternately, the system may decide to sacrifice orthogonality by allocating an available secondary scrambling code. In both cases the process ends in 390.

When the terminal moves from the coverage area of a beam to the coverage area of another, a lack of orthogonality may arise because the communications within the new serving beam are allocated a different secondary scrambling code than the one allocated to the communication with the terminal. In order to avoid a too high level of interference when moving from one beam to another, the radio bearer can adopt the secondary scrambling code of the new serving beam and a new orthogonal spreading code, if the original one is not available under the new OVSF tree. This procedure of reconfiguration is less complex than a classic handover because it does not require the establishment followed by the release of a radio bearer, entailing transient duplication of a radio resource. If the terminal moves from a sector to another or from one cell to another, a conventional handover procedure takes place.

The secondary scrambling code allocation set out above for a sector equally applies to an unsectored cell. The beams covering the cell area are allocated different secondary scrambling codes. The allocation procedure is the same as the one described in relation to Fig. 3. Similarly, when a mobile moves within the cell from the coverage area of a beam to the coverage area of another, the radio bearer can be reconfigured to adopt the secondary scrambling code of the new serving beam.

Next, the implementation of the secondary scrambling code allocation procedure will be described.

According to a first embodiment, the mobile compares the power level of the signal received from the different beams within the sector (resp. the cell). More precisely, the mobile measures the power of the signal received from the secondary CPICHs (Common Pilot CHannel). It is recalled here that UTRAN has two types of common pilot channels, primary and secondary. The difference is that the primary CPICH is coded with the primary scrambling code with a fixed channelisation code while the secondary CPICH may be coded with a secondary scrambling code and a channelisation code. There is only one primary CPICH per sector or cell. In contrast, several secondary CPICHs may be simultaneously present in the same sector (resp. cell). The beams formed by the adaptive antenna array transmit the secondary CPICHs. If different secondary scrambling codes are allocated to different beams, the mobile can measure the power received from each beam on the secondary CPICH. The measurement reporting procedure is initiated by the RNC or by the UE (mobile) itself. For example, the measurement reporting procedure can be initiated by the RNC prior to the establishment of a connection, if the OVSF tree under the primary scrambling code is saturated. In such instance, the measurement report is sent over an RRC (Radio Resource Control) connection between the UE and the RNC via the logical channel CCCH (Common Control CHannel). The measurement reporting procedure can also be initiated by the UE during the connection. For example, the UE measures at regular intervals the power received from each beam on the secondary CPICH and when a power change is observed, a measurement is transmitted to the RNC. In such instance, the measurement report is sent via the logical channel DCCH (Dedicated Control Channel) to the RNC. The measurement report is carried by a message together with the measurement identity and an identification of the mobile.

According to a second embodiment, the node B uses the antenna array for determining the direction of arrival (DOA) of the signal transmitted by the mobile e.g. pilot symbols of the DPCCH (Dedicated Physical Control CHannel). Once the DOA of the signal is obtained, the base station determines which beam covers the direction of arrival and a message containing this information, i.e. the best beam, is transmitted to the RNC over the I_{ub} interface. As in the first embodiment, the determination of the best beam may be initiated by the RNC or by the node B. For example, it can be initiated by the RNC prior to the establishment of a connection, if the OVSF tree under the primary scrambling code is saturated. The node B can also monitor the DOA after the establishment of the connection in order to check whether the best beam has changed during the communication. If it has, a message identifying the new best beam for the mobile is transmitted to the RNC which then decides whether to reallocate a new secondary scrambling code, e.g. the one associated with the new best beam. Avantageously, the monitoring of the direction of arrival is restricted to the mobiles for which a secondary scrambling code is allocated. Whether the best beam is determined at the initiative of the node B or at the initiative of the RNC, the allocation of the second scrambling is performed by the RNC.

## Claims

**1.** Method for allocating scrambling codes in a CDMA mobile communication system allocating to each downlink communication a channelisation code and a scrambling code, said scrambling code being selected among a set of scrambling codes comprising a primary scrambling code and a plurality of secondary scrambling codes, **characterised in that**, if the primary scrambling code is not available, a secondary scrambling code is allocated so that distinct secondary scrambling codes are allocated to spatially separated communications.

**2.** Method for allocating scrambling codes as claimed in claim 1, **characterised in that**, a plurality of transmission beams being formed in the same plurality of directions, distinct secondary scrambling codes are allocated to communications with mobiles covered by spatially separated beams.

**3.** Method for allocating scrambling codes as claimed in claim 1, **characterised in that**, a plurality of transmission beams being formed in the same plurality of directions, the primary scrambling code and at least one secondary scrambling code are allocated to communications with mobiles covered by spatially separated beams.

**4.** Method for allocating scrambling codes as claimed in claim 1 or 2, **characterised in that**, when a secondary scrambling code is to be allocated to a communication with a mobile, said mobile measures a signal power received from each of said plurality of transmission beams.

**5.** Method for allocating scrambling codes as claimed in claim 1 or 2, **characterised in that**, when a connection is established with a mobile, said mobile measures at regular intervals the signal power received from said plurality of transmission beams.

**6.** Method for allocating scrambling codes as claimed in claims 4 or 5, **characterised in that**, when said measurements indicate that the mobile has moved from the coverage area of a first transmission beam to the coverage area of a second transmission beam, the downlink communication with said mobile is allocated the scrambling code associated with the second transmission beam,

**6.** Method for allocating scrambling codes as claimed in claims 4 or 5, the CDMA system being a UMTS system , **characterised in that** the measurements of the mobile are transmitted to the Radio Network Controller as a power measurement report.

**7.** Method for allocating scrambling codes as claimed in claim 2 or 3, **characterised in that**, when a secondary scrambling code is to be allocated to a communication with a mobile, the base station serving said mobile determines the direction of arrival of a signal transmitted by said mobile and deduces therefrom the best beam corresponding to said direction of arrival.

**8.** Method for allocating scrambling codes as claimed in claim 7, **characterised in that**, the CDMA system being a UMTS system, an information giving said best beam is transmitted by said base station to the Radio Network Controller.
